# EUROPEAN PATENT SPECIFICATION

(11) **EP 4 555 238 B1**
(45) Date of publication and mention of the grant of the patent: **18.03.2026**
(21) Application number: 23733774.6
(22) Date of filing: 21.06.2023
(51) Int. Cl.: F16K 1/30, F16K 17/30, F16K 37/00

(54) **VALVE**
VENTIL
SOUPAPE

(30) Priority: 11.07.2022 IT 202200014545
(43) Date of publication of application: 21.05.2025
(73) Proprietor: Truma Gerätetechnik GmbH & Co. KG, 85640 Putzbrunn (DE)
(72) Inventor: PELI, Claudio, 25030 Torbole Casaglia (IT); PERONI, Davide, 25064 Gussago (IT); BAZZARDI, Davide, 25039 Travagliato (IT)
(74) Representative: Prinz & Partner mbB
(86) International application number: PCT/EP2023/066740
(87) International publication number: WO 2024/012821

(56) References cited:
- EP-A1- 0 768 484
- EP-A2- 0 090 941
- CN-A- 103 924 993
- DE-U1- 9 005 756
- JP-U- S60 169 500
- NZ-A- 213 700
- US-B2- 6 792 972

## Description

The present invention refers to a valve.

In the state of art valves are known that interrupt the flow of a gas if a hose or pipe is ruptured or if a flow rate exceeds a threshold. An example of such a valve is given by EP 0 090 941 A2.

An object of the invention is to provide a valve that clearly indicates that the gas flow has been interrupted.

The object is achieved with a valve comprising an inlet, an outlet, a flow path, a closing element, a closing element seat, a reset pin, an indicator plug, a housing, an indicator housing, a die and a die spring, wherein the flow path connects the inlet with the outlet, wherein in case that the closing element is in a closing position relative to the closing element seat, the flow path is closed, wherein the reset pin and the indicator plug are connected to each other, wherein a movement of the reset pin and the indicator plug pushes the closing element away from the closing position, wherein the indicator housing at least partially covers the indicator plug in case that a pressure difference between the inlet and the outlet is greater than a given value, wherein the housing encompasses a chamber, wherein the chamber branches off from the flow path, wherein the chamber is located downstream to the closing element seat, wherein the die is located within the chamber, wherein the die and the indicator housing are connected to another, so that a movement of the indicator housing causes a movement of the die and vice versa, and wherein a force of the die spring acts on the die towards an interior of the chamber.

The inventive valve has a flow path through which a gas flows from an inlet to an outlet in the normal situation of usage. If a flow of the gas increases beyond a certain threshold, then a closing element closes the flow path and, thus, interrupts the flow. This is the result of the activation of the safety or excess flow function of the valve. The flow path is closed when the closing element is in a closing position relative to a closing element seat. The closing element seat comprises e.g. a sealing like an O-ring. Hence, if the flow of the gas increases, the closing element moves from a normal position towards the closing position and interacts with the closing element seat in such a way that the flow path is closed and that there is no gas flow. A reset pin and an indicator plug serve for opening the flow path. They are connected with each other and a movement of them pushes the closing element away from the closing position and, thus, away from the closing element seat.

In order to signal the activation of the safety feature, there is an indicator housing. During the normal situation, the indicator housing at least partially covers the indicator plug. The normal situation is given a) by a gas flow with a flow rate below that threshold and b) by a difference between the pressure at the inlet and at the outlet greater than a given value. If there is no gas flow or the pressure difference is too low, then the indicator plug will be visible as the indicator housing does not cover it any longer. Hence, the valve provides a clear indication that the flow has been interrupted.

The housing surrounds a chamber that is connected to the flow path. Within the chamber is a die that is pushed by a die spring towards the interior of the chamber. During a normal situation with the flow path open, gas will flow into the chamber. If the pressure of gas between inlet and outlet of the valve is larger than a given value being dependent on the characteristics of the die spring, the die will be pushed towards the wall of the chamber, i.e. away from the interior of the chamber.

Due to the rigid connection between die and indicator housing, the location of the indicator housing is depending on the gas pressure. If the pressure drops, the die spring moves the die towards the interior of the chamber and, consequently, the indicator housing is pulled back towards the chamber and exposes the indicator plug. In the same way, if the pressure difference between inlet and outlet is too low, the indicator plug will be visible, too. Hence, in case of an interruption, the indicator housing is moved and the indicator plug remains in its position. Further, closing the flow path and indicating this closure are achieved by uncoupled elements of the valve: the closing element and the combination of die and indicator housing are separated from another. The position of the indicator plug and of the reset pin, preferably, do not depend on the pressure within the chamber and, thus, do not move if the pressure changes.

According to an embodiment, the valve comprises a closing element spring, and the closing element moves against a force of the closing element spring towards the closing position. In this embodiment, a spring pushes the closing element away from the closing element seat and, thus, tries to keep the flow path open. The closing element spring allows to define the threshold value for the flow above which the valve automatically closes.

In an embodiment, the reset pin is partially located within the die, wherein a seal is located between the reset pin and the die, and wherein another seal is located between the die and a wall of the housing surrounding the chamber. In this embodiment, the reset pin reaches e.g. through a recess of the die. The movements of reset pin and die do not affect each other. As the reset pin reaches through the housing, there is one seal between reset pin and die and another seal between die and chamber wall. Hence, this end of the chamber is closed by two seals sealing the gap between reset pin and die and the gap around the die within the chamber.

According to an embodiment, the indicator housing comprises a front region, and a size of the front region and a size of the indicator plug are matched to each other, that at least a part of the indicator plug fits into the front region. The front region is the part of the indicator housing directed towards the front end of the indicator plug and directed away from the housing. **In** a further embodiment, the front region of the indicator housing has an opening with an inner diameter greater than the outer diameter of the indicator plug. This allows the indicator plug to be surrounded by the indicator housing and, thus, to be less prominent and visible during the normal situation.

In an embodiment, the indicator housing comprises a back region, and a size of the back region and a size of a front end of the housing are matched to each other, that at least a part of the front end fits into the back region. In this embodiment, the indicator housing comprises a back region directed towards the front end of the housing. The back region is larger than the front end. Thus, if the indicator housing is moved backwards towards the housing, the back region partially covers the front end of the housing. In a further embodiment, the back region comprises an opening with an inner diameter larger than the outer diameter of the front end of the housing.

In an embodiment, the front region and the back region are two opposite ends of the indicator housing.

In a further embodiment, the valve further comprises a reset pin spring, wherein the reset pin spring and the reset pin are connected to another, and wherein a force of the reset pin spring is directed away from the closing element seat. In this embodiment, a reset pin springs acts against the direction of the reset pin during the reset of the valve. Hence, the opening of the flow path cannot occur accidentally.

In another embodiment, along the flow path an angle is enclosed between the inlet and the outlet. In this embodiment, the flow path does not follow a straight direction but encompasses an angle.

In detail, there is a plurality of possibilities to design and further develop the method and the system. Reference is made to the following description of a preferred embodiment in conjunction with the drawing.

It shows:
- Fig. 1: a sectional drawing of an inventive valve in a normal state and
- Fig. 2: the valve of Fig. 1 in an activated state.

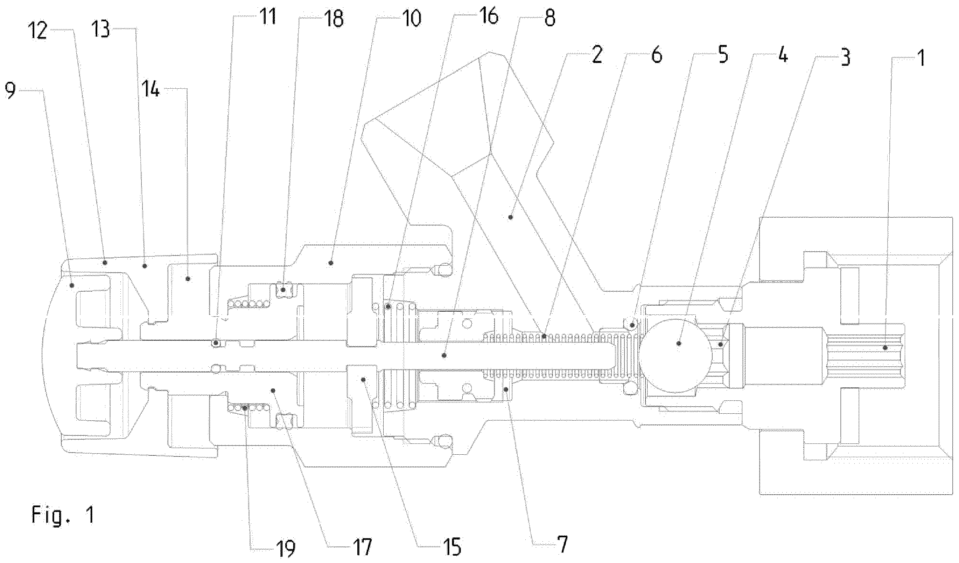

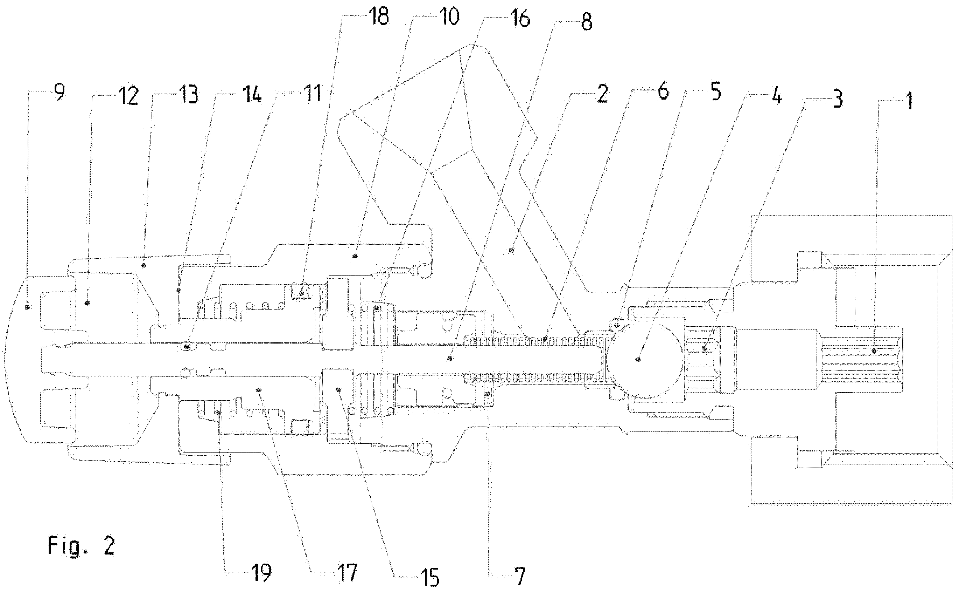

Fig. 1 and Fig. 2 show an embodiment of the inventive valve in two different states. Fig. 1 shows the normal state in which the excess flow feature of the valve is not activated. Thus, the gas flows along the flow path 3 from the inlet 1 to the outlet 2 of the valve. In Fig. 2, the excess flow feature is activated and the excess gas flow is interrupted. Both figures are described jointly in the following.

The flow path 3 is not straight but inlet 1 and outlet enclose an angle between 90° and 180°. In the shown embodiment, the housing 10 is aligned with the inlet 1.

Within the flow path 3 between the inlet 1 and the outlet 2 a moveable closing element 4 is located. The closing element 4 is here, for example, given by a sphere. If the flow of the gas increases above a given threshold, the closing element 4 will be pushed against a closing element seat 5 and will, thus, close the flow path 3. The value of the threshold depends on the closing element spring 6, which pushes the closing element 4 away from the closing element seat 5 and, thus, opposite to the direction in which the gas flows within the valve.

Downstream behind the closing element seat 5 and within the housing 10, there is a connection to a chamber 7 which branches off from the flow path 3. In the chamber 7, a reset pin 8 is arranged that can be moved along an axis of the chamber 7. The - in the shown embodiment rod-like - reset pin 8 is connected at one end rigidly to an indicator plug 9 that can be pushed from the outside of the valve and allows a user to reset the valve and to open the gas flow through it. The reset is done by moving the reset pin 8 towards the closing element 4 and, accordingly, pushing the closing element 4 away from the closing element seat 5 towards the inlet 1 of the valve.

As the indicator plug 9 is outside of the housing 10, the reset pin 8 reaches through the housing 8. A disk 15 is fixed to the reset pin 8. During a reset movement, the disk 15 compresses a reset pin spring 16 being located between a shoulder of the housing 10 and the disk 15. The reset pin spring 16, thus, defines the force which must be acted on the indicator plug 9 in order to move the closing element 4 and to open the flow path 3.

In the chamber 7 is also a die 17 moveably arranged. If gas enters the chamber 7, the pressure in it rises. If the pressure is greater than a given value, then the die 17 will be moved away from the connection between the flow path 3 and the chamber 7. As the die 17 is connected to the indicator housing 13, the indicator plug 9 becomes more and more radially surrounded by a front region 12 of the indicator housing 13. Hence, the gas pressure pushes the indicator housing 13 towards the indicator plug 9 whose position is not affected by the gas pressure. The front region 12 of the indicator housing 13 has an opening with inner diameter larger than the outer diameter of the indicator plug 9. The value of pressure which is required to move the die 17 away from the direction of the flow path 4 is depending on the characteristics of the die spring 19. The die spring 19 is located between a shoulder of the die 17 and the front end of the housing 10.

The indicator housing 13 in the shown embodiment further comprises a back region 14 which has an opening larger than the corresponding front end of the housing 10. Hence, the back region 14 of the indicator housing 13 is moved over the front end of the housing 10.

Thus, during the normal situation of the valve, the indicator plug 9 is less visible as it is partially covered by the indicator housing 13. If the valve is closed, the indicator housing 13 moves backwards and the indicator plug 9 indicates that the excess flow function has been activated. In order to increase the contrast, the indicator plug 9 has preferably a bright color (e.g. yellow) and the indicator housing 13 sports a darker color (e.g. black). Both, indicator plug 9 and indicator plug housing 13 are located outside of the housing 10.

The reset pin 8 reaches through a passage within the die 17. A seal 11 surrounds the reset pin 8 within this passage. The reset pin 8 can be moved relative to the die 17 and relative to the indicator housing 13. The die 17 also reaches through the front end of the housing 10 in a gas tight way. The die 17 carries in the chamber 7 a seal 18 sealing the opening between the die 17 and the inner wall of the chamber 7.

The housing 10 and its components will be described again with different words:
The housing 10 comprises a chamber 7 which follows downstream the closing element seat 5. Within the chamber 7, the reset pin 8 is arranged. The reset pin 8 can be moved along a longitudinal axis of the chamber 7. The reset pin 8 is pushed by the indicator plug 9 - which is located outside of the housing 10 - towards the closing element seat 5 and against the force of the reset pin spring 16. The reset pin 8 is partially surrounded by a die 17. The die 17 can also be moved within the chamber 7. Between the passage of the die 17 and the reset pin 8 a seal 11 is located. On the die 17 acts in one direction the die spring 19 and in the opposite direction the gas pressure within the chamber 7. As the indicator housing 13 is connected to the die 17, the indicator housing 13 is pushed away from the housing 10, if the gas pressure is higher than a value dependent of the force of the die spring 19. This is the normal or usual state of the valve in which the gas flows through the flow path 3. If the valve is activated, there is no gas in the chamber 7, the pressure drops and the indicator housing 13 is pulled backwards by the die spring 19. Between the die 17 and the inner wall of the housing 10 another seal 18 is arranged.

The interaction of the components of the valve will be explained once more with regard to the two states of Fig. 1 and Fig. 2:
In the normal state shown in Fig. 1 the gas flows from the inlet 1 to the outlet 2. In this state the pressure in the chamber 7 is greater than the force of the die spring 19. Thus, the indicator housing 13 surrounds radially the indicator plug 9.

If e. g. due to a rupture of the hose the gas flow increases beyond a threshold depending on the characteristics of the closing element spring 6, then the closing element 4 closes the flow path 3. Consequently, the pressure within the chamber 7 falls and the indicator housing 13 is pulled back, thus, releasing the indicator plug 9. The result is shown in Fig. 2.

In order to reset the valve, a user presses the indicator plug 9 and pushes via the connected reset pin 8 the closing element 4 away from the closing element seat 5. If gas is present, it can flow from the inlet 1 into the chamber 7. If the resulting pressure in the chamber 7 is high enough, the die 17 will be pushed outwards. As a result of this movement the indicator housing 13 again will surround the indicator plug 9. This is the transfer from the situation of Fig. 2 to the situation shown in Fig. 1.

### List of reference signs

- 1: inlet
- 2: outlet
- 3: flow path
- 4: closing element
- 5: closing element seat
- 6: closing element spring
- 7: chamber
- 8: reset pin
- 9: indicator plug
- 10: housing
- 11: seal
- 12: front region
- 13: indicator housing
- 14: back region
- 15: disk
- 16: reset pin spring
- 17: die
- 18: seal
- 19: die spring

## Claims

1. Valve
comprising an inlet (1), an outlet (2), a flow path (3), a closing element (4), a closing element seat (5), a reset pin (8), an indicator plug (9), a housing (10), an indicator housing (13), a die (17) and a die spring (19),
wherein the flow path (3) connects the inlet (1) with the outlet (2),
wherein in case that the closing element (4) is in a closing position relative to the closing element seat (5), the flow path (3) is closed,
wherein the reset pin (8) and the indicator plug (9) are connected to each other, wherein a movement of the reset pin (8) and the indicator plug (9) pushes the closing element (4) away from the closing position,
wherein the indicator housing (13) at least partially covers the indicator plug (9) in case that a pressure between the inlet (1) and the outlet (2) is greater than a given value,
wherein the housing (10) encompasses a chamber (7),
wherein the chamber (7) branches off from the flow path (3),
wherein the chamber (7) is located downstream to the closing element seat (5),
wherein the die (17) is located within the chamber (7),
wherein a force of the die spring (19) acts on the die (17) towards an interior of the chamber (7), **characterized in that**
the die (17) and the indicator housing (13) are connected to another, so that a movement of the indicator housing (16) causes a movement of the die (17) and vice versa.

2. Valve according to claim 1,
wherein the valve comprises a closing element spring (6), and
wherein the closing element (4) moves against a force of the closing element spring (6) towards the closing position.

3. Valve according to claim 1 or 2,
wherein the reset pin (8) is partially located within the die (17),
wherein a seal (11) is located between the reset pin (8) and the die (17), and
wherein another seal (18) is located between the die (17) and a wall of the housing (10) surrounding the chamber (7).

4. Valve according to any of claims 1 to 3,
wherein the indicator housing (13) comprises a front region (12), and
wherein a size of the front region (12) and a size of the indicator plug (9) are matched to each other, that at least a part of the indicator plug (9) fits into the front region (12).

5. Valve according to any of claims 1 to 4,
wherein the indicator housing (13) comprises a back region (14), and
wherein a size of the back region (14) and a size of a front end of the housing (10) are matched to each other, that at least a part of the front end (10) fits into the back region (14).

6. Valve according to any of claims 1 to 5,
wherein the valve further comprises a reset pin spring (16),
wherein the reset pin spring (16) and the reset pin (8) are connected to another, and
wherein a force of the reset pin spring (16) is directed away from the closing element seat (5).

## Patentansprüche

1. Ventil
mit einem Einlass (1), einem Auslass (2), einem Strömungsweg (3), einem Schließelement (4), einem Schließelementsitz (5), einem Rückstellstift (8), einem Anzeigestopfen (9), einem Gehäuse (10), einem Anzeigegehäuse (13), einem Stempel (17) und einer Stempelfeder (19),
wobei der Strömungsweg (3) den Einlass (1) mit dem Auslass (2) verbindet, wobei in dem Fall, dass sich das Schließelement (4) bezüglich des Schließelementsitzes (5) in einer Schließposition befindet, der Strömungsweg (3) geschlossen ist,
wobei der Rückstellstift (8) und der Anzeigestopfen (9) miteinander verbunden sind,
wobei durch eine Bewegung des Rückstellstifts (8) und des Anzeigestopfens (9) das Schließelement (4) aus der Schließposition weggedrückt wird,
wobei das Anzeigegehäuse (13) in dem Fall, dass ein Druck zwischen dem Einlass (1) und dem Auslass (2) größer als ein vorgegebener Wert ist, den Anzeigestopfen (9) zumindest teilweise abdeckt,
wobei das Gehäuse (10) eine Kammer (7) umschließt,
wobei die Kammer (7) vom Strömungsweg (3) abzweigt,
wobei die Kammer (7) stromabwärts des Schließelementsitzes (5) gelegen ist,
wobei sich der Stempel (17) in der Kammer (7) befindet,
wobei eine Kraft der Stempelfeder (19) zu einem Inneren der Kammer (7) hin auf den Stempel (17) wirkt, **dadurch gekennzeichnet, dass**
der Stempel (17) und das Anzeigegehäuse (13) miteinander verbunden sind, so dass durch eine Bewegung des Anzeigegehäuses (13) eine Bewegung des Stempels (17) bewirkt wird und umgekehrt.

2. Ventil nach Anspruch 1,
wobei das Ventil eine Schließelementfeder (6) umfasst und
wobei sich das Schließelement (4) gegen eine Kraft der Schließelementfeder (6) zur Schließposition hin bewegt.

3. Ventil nach Anspruch 1 oder 2,
wobei sich der Rückstellstift (8) teilweise in dem Stempel (17) befindet,
wobei sich zwischen dem Rückstellstift (8) und dem Stempel (17) eine Dichtung (11) befindet und
wobei sich eine weitere Dichtung (18) zwischen dem Stempel (17) und einer die Kammer (7) umgebenden Wand des Gehäuses (10) befindet.

4. Ventil nach einem der Ansprüche 1 bis 3,
wobei das Anzeigegehäuse (13) einen vorderen Bereich (12) umfasst und
wobei eine Größe des vorderen Bereichs (12) und eine Größe des Anzeigestopfens (9) so aufeinander abgestimmt sind, dass zumindest ein Teil des Anzeigestopfens (9) in den vorderen Bereich (12) passt.

5. Ventil nach einem der Ansprüche 1 bis 4,
wobei das Anzeigegehäuse (13) einen hinteren Bereich (14) umfasst und
wobei eine Größe des hinteren Bereichs (14) und eine Größe eines vorderen Endes des Gehäuses (10) so aufeinander abgestimmt sind, dass zumindest ein Teil des vorderen Endes (10) in den hinteren Bereich (14) passt.

6. Ventil nach einem der Ansprüche 1 bis 5,
wobei das Ventil ferner eine Rückstellstiftfeder (16) umfasst,
wobei die Rückstellstiftfeder (16) und der Rückstellstift (8) miteinander verbunden sind und
wobei eine Kraft der Rückstellstiftfeder (16) vom Schließelementsitz (5) weg gerichtet ist.

## Revendications

1. Soupape
comprenant une entrée (1), une sortie (2), un passage d'écoulement (3), un élément de fermeture (4), un siège (5) d'élément de fermeture, une goupille de retour (8), un bouchon indicateur (9), un boîtier (10), un boîtier indicateur (13), une matrice (17) et un ressort de matrice (19),
le passage d'écoulement (3) reliant l'entrée (1) à la sortie (2),
le passage d'écoulement (3) étant fermé lorsque l'élément de fermeture (4) est dans une position de fermeture par rapport au siège (5) d'élément de fermeture,
la goupille de rappel (8) et le bouchon indicateur (9) étant reliés l'une à l'autre,
un mouvement de la goupille de retour (8) et du bouchon indicateur (9) poussant l'élément de fermeture (4) en éloignement de la position de fermeture,
le boîtier indicateur (13) recouvrant au moins partiellement le bouchon indicateur (9) dans le cas où une pression entre l'entrée (1) et la sortie (2) est supérieure à une valeur donnée,
le boîtier (10) renfermant une chambre (7),
la chambre (7) bifurquant à partir du passage d'écoulement (3),
la chambre (7) étant agencée en aval du siège (5) d'élément de fermeture,
la matrice (17) étant agencée à l'intérieur de la chambre (7),
une force du ressort de matrice (19) agissant sur la matrice (17) vers l'intérieur de la chambre (7), **caractérisée en ce que** la matrice (17) et le boîtier indicateur (13) sont reliés l'une à l'autre de sorte qu'un mouvement du boîtier indicateur (16) provoque un mouvement de la matrice (17) et vice versa.

2. Soupape selon la revendication 1,
la soupape comprenant un ressort (6) d'élément de fermeture, et
l'élément de fermeture (4) se déplaçant à l'encontre d'une force du ressort (6) d'élément de fermeture vers la position de fermeture.

3. Soupape selon la revendication 1 ou 2,
la goupille de rappel (8) étant partiellement agencée à l'intérieur de la matrice (17),
un joint d'étanchéité (11) étant agencé entre la goupille de rappel (8) et la matrice (17), et
un autre joint d'étanchéité (18) étant agencé entre la matrice (17) et une paroi du boîtier (10) entourant la chambre (7).

4. Soupape selon l'une des revendications 1 à 3,
le boîtier indicateur (13) comprenant une zone avant (12), et
une taille de la zone avant (12) et une taille du bouchon indicateur (9) étant adaptées l'une à l'autre, de sorte qu'au moins une partie du bouchon indicateur (9) s'insère dans la zone avant (12).

5. Soupape selon l'une des revendications 1 à 4,
le boîtier indicateur (13) comprenant une zone arrière (14), et
une taille de la zone arrière (14) et une taille d'une extrémité avant du boîtier (10) étant adaptées l'une à l'autre, de sorte qu'au moins une partie de l'extrémité avant (10) s'insère dans la zone arrière (14).

6. Soupape selon l'une des revendications 1 à 5,
la soupape comprenant en outre un ressort (16) de goupille de rappel,
le ressort (16) de goupille de rappel et la goupille de rappel (8) étant reliés l'un à l'autre, et
une force du ressort (16) de goupille de rappel étant dirigée en éloignement du siège (5) d'élément de fermeture.
